(19) Europäisches Patentamt
European Patent Office
Office européen des brevets

(11) **EP 4 468 174 A1**

(12) **EUROPEAN PATENT APPLICATION**

(43) Date of publication:
27.11.2024 Bulletin 2024/48

(21) Application number: 23174940.9

(22) Date of filing: 23.05.2023

(51) International Patent Classification (IPC):
*G06F 17/14* (2006.01)  *G06F 17/18* (2006.01)

(52) Cooperative Patent Classification (CPC):
G06F 17/18; G06F 17/148; G06N 3/0455;
G06N 3/08

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: **VOLKSWAGEN AG**
38440 Wolfsburg (DE)

(72) Inventor: **Medghalchi, Bahareh**
38102 Braunschweig (DE)

(54) **METHOD FOR GENERATING TRAINING DATA FOR TRAINING AN ARTIFICIAL INTELLIGENCE, METHOD FOR TRAINING AN ARTIFICIAL INTELLIGENCE, METHOD FOR DETERMINING AN EVENT OF A MOTOR VEHICLE, COMPUTER PROGRAM PRODUCT, TEST SYSTEM AND ASSISTANCE SYSTEM**

(57) The invention describes a method for generating training data (12) for training an artificial intelligence (6) for determining an event (11) in a motor vehicle (1) by a test system (13), comprising the steps of capturing a temporal signal (14) by a capturing device (4) of the test system (13); transforming the temporal signal (14) to an event signal (15) by an electronic computing device (5) of the test system (13); generating a scalogram (16) of the event signal (15) by the electronic computing device (5); providing a first threshold (17) for a magnitude of the event (11) in the event signal (15); filtering the scalogram (16) by using the threshold (17); labeling the event (11) in the filtered scalogram (19) by using an predefined object detection algorithm (21) for the event (11) by the electronic computing device (5); extracting the labeled event (11) from the event signal (15) by the electronic computing device (5); and generating the training data (12) depending on the extracted event (11) by the electronic computing device (5). Furthermore, the invention relates to a method for training an artificial intelligence (6), to a method for determining an event (11) of a motor vehicle (1), to a computer program product, to a test system (13), as well as to an assistance system (2).

Fig. 3

EP 4 468 174 A1

**Description**

The invention relates to a method for generating training data for training an artificial intelligence for determining an event of a motor vehicle by a test system. Furthermore, the invention relates to a method for training an artificial intelligence for determining an event of a motor vehicle by using the training data. Another aspect of the invention relates to a method for determining an event of a motor vehicle by an assistance system of the motor vehicle, to a computer program product with program code means, to a test system for generating training data for training an artificial intelligence for determining an event of a motor vehicle and to an assistance system for determining an event of a motor vehicle.

Active motor vehicle safety is a technology that not only tries to prevent accidents intelligently but also reduces the impact of dangerous driving situations. It monitors the performance of the vehicle and takes care of the surroundings consistently and attempts to prevent accidents before they actually happen or at least mitigate the damages. This procedure is carried out through analyzing the data which are recalled through the sensors during the trip. Lane support system (LSS) is one of the active vehicle safety functionalities which controls the distance of the motor vehicle to the lane marking and warns the driver if there is an unintentional drift with the risk of crossing the line on the street. LSS is one of the most important criteria which are often controlled by the so-called Euro NCAP for assessing the car safety performance. Euro NCAP is a voluntary vehicle safety rating system that provides European consumers with information regarding the safety of passenger vehicles. Therefore, it is important for the automobile manufactures that their motor vehicles pass the test which are conducted, for example, by the Euro NCAP to assess safety functionalities of the motor vehicles.

At the moment, when variation from the lane is recognized by the sensors, and slight vibration on the steering wheel is generated, and this vibration is a key sign which shows that the LSS system has recognized and reacted to the deviation. This vibration is mostly noticeable through the data which are recorded by the sensors that measure the moment on the steering column. Detecting the time interval is not only of high significance for the car manufactures but also as a decisive matric for Euro NCAP to detect the time point and the time interval, when and how long the motor vehicle under test has reacted to the lane deviation, in other words, they conduct tests to see, whether the LSS system of the motor vehicles react to the motor vehicles deviation and whether the driver would be warned and gotten back to the lane.

Therefore, an OEM (Original Equipment Manufacturer) tries to run tests to assess the LSS performance in advance and see if the vibration is generated and find the start and end point of the warning vibration.

Considering the number of tests which are conducted and should be checked, monitoring every single time series data which is recorded by the sensors and finding general vibration intervals manually is time-consuming and cumbersome task. Therefore, an automated super vision detection algorithm is required. Furthermore, sometimes in the cases where the vehicles are tested either by the Euro NCAP administrator, who actually drives the cars for running a test or by a random inspector, it can be an illusion to find whether the driver has felt the warning vibration on time. Therefore, having an automated algorithm which can inspect the time series signal and find the time interval where the steering wheel have vibrated will automate the inspection procedure.

US 2016/0221575 A1 relates to a method for optimizing a driver assistance system having the work steps of defining at least one driver assistance system A to be optimized, determining at least one vehicle parameter function that is suitable for characterizing an operating state of a vehicle, and at least one environmental parameter function that is suitable for characterizing the surroundings of the vehicle, calculation of at least one driving situation characteristic function that characterizes a driving situation of the vehicle, particularly at least on the basis of the at least one vehicle parameter function and/or of the at least one environmental parameter function, calculation of at least one control intervention characteristic function that is suitable for characterizing the activity of the driver assistance system A, and calculation of a correction function that depends on the at least one driving situation characteristic function and characterizes a subjective perception of the driving situation by at least one passenger, particularly on the basis of the at least one control intervention characteristic function and on the basis of the at least one vehicle parameter function and/or of the at least one environmental parameter function.

US 2020/0346656 A1 provides a driver assist design analysis system including a processing system and a database that stores vehicle data, vehicle operational data, vehicle accident data, and environmental data related to the configuration and operation of a plurality of vehicles with driver assist systems or features. The driver assist design analysis system also includes one or more analysis engines that execute on the processing system to determine one or more driving anomalies based on the vehicle operational data, and that correlate or determine a statistical relationship between the driving anomalies and the operation of the driver assist systems or features. The driver assist design analysis system then determines an effectiveness of operation of one or more of the driver assist systems or features based on the statistical relationship to determine a potential design flaw in the driver assist systems or features, and the driver assist design analysis system notifies a user or receiver of the potential design flaw.

It is an object of the invention to provide a method for generating training data, a method for training an artificial intelligence, a method for determining an event, a computer program product, a test system as well as an assistance system, by which detecting an event may be realized in an efficient way.

This object is solved by a method for generating training data, a method for training an artificial intelligence, a method for determining an event, a computer program product, a test system as well as an assistance system according to the independent claims. Advantageous forms of configuration are presented in the dependent claims.

One aspect of the invention relates to a method for generating training data for training an artificial intelligence for determining an event in a motor vehicle by a test system. A temporal signal is captured by a capturing device of the test system. The temporal signal is transformed to an event signal by an electronic computing device of the test system. A scalogram of the event signal is generated by the electronic computing device. A first threshold for a magnitude of the event in the event signal is provided. The scalogram is filtered by using this threshold. The event is labeled in the filtered scalogram by using an predefined object detection algorithm for the event by the electronic computing device. The labeled event is extracted from the event signal by the electronic computing device and the training data is generated depending on the extracted event by the electronic computing device.

Therefore, an event detection method, in particular in the field of signal processing, is proposed, which is different to a threshold-based, anomaly-based and machine-learning-classificationbased methods. One important advantage of the limitation of machine-learning-basedclassification methods and threshold-based methods is its capability in generalization. In contrast to other methods, the performance of this approach does not get easily effected by factors such as type of the motor vehicle under test, measuring device and driving conditions. In such a way that even the method trained based on the gathered data by one service provider had still accurate performance in detecting the event in test data recorded by a different service provider, which uses completely different testing equipment and driving conditions.

In developing the proposed algorithm, filtering and modifying the scalograms generated from the time-series-data have made the performance of detection algorithm robust to the imbalances and instabilities existed in the time-series-data. Such filtering of the scalograms have disappeared most of the irrelevant and uninteresting parts of the scalograms and the decided event in time-series-data gets highlighted on the scalograms without the need to either finding out the features of event and tracking the event by the means of its feature or training classification method which classifies the whole data set to find the class in which an event exists and made the object detection much more easier.

In particular, the active vehicle safety tests with the test system are run in so-called in trial areas or service providers, and the data which are gathered are gathered by sensors, and the tests are saved as time-series-signals. These time-series-signals are regarded as just a temporal signal. For developing an event detection algorithm, there is a need to find the sensors which are for example sensitive to steering wheel vibrations and whose data are affected by the event. As mentioned previously, the sensor that measures the moment at the steering column senses the conspicuous vibrations generated from the so-called LSS (Lane Support System) and through observing the signal by an expert, the intended event is the respective time interval of the vibration and can be determined by opening, observing and inspecting the signals of each test one by one is time-consuming, and specifying the event start and end points by an observer is imprecise. Therefore, the artificial intelligence is needed to inspect the signals automatically and find the event and preferably the corresponding time interval. In other words, the capturing device may be the sensor that measures the moment at the steering column.

After that, there is a need to define data points or objects for the artificial intelligence algorithm. For this aim, initially recorded signals for example of the steering column moment which are gathered in tests are divided into so-called user-defined-fixed-time-length. This approach is called "windowing", meaning that the time-series-signal is divided into intervals of the same length. In order to execute the windowing and extract the timing windows, not only a fixed length of time for the windows but also a step size is defined according to which one advances along the signal and extracts the timing windows. Each window is considered as one object for the artificial intelligence algorithm. The second step is defining the labels for the objects of the artificial intelligence algorithm or windows. Therefore, there is for example a classification algorithm used that has been developed meaning that the algorithm tries to identify objects of a specific class amongst all different objects. In particular, for example, a one class classification (OCC) is used through learning from a training data set containing only the objects of that specific classification. The one class classification can be considered as opposite of anomaly detection. In anomaly detection, a small number of the object or data points is detected which are most unlike to the most of the data points, but in the one class classification the aim is to detect the small number of data points or objects which are most alike to each other and probably to a single group but very different from the rest of the objects.

The third step may be the feature extraction. After gathering the window a feature extraction method is used for extracting suitable features from timing windows. The visual representation such as the scalogram are one of the feature extraction methods. Those methods are enabled by an electronic computing device to take the advantage of the image processing artificial networks for analyzing time-series-data. In particular, a scalogram is created from each timing window. Scalograms can be calculated and visualized perfectly by program software such as Matlab or Python.

To accurately analyze real-world signals that have locally abrupt changes, a class or function is needed that is well-localized in time and frequency. A wavelet is a decaying wave which has zero mean and unlike sinus and cosin functions which extend to infinity, a wavelet exists only for a finite duration. A wavelet would be scaled or shifted. By scaling a wavelet, it is going to be extended or be compressed. A scaling factor corresponds to how much a signal is scaled in time, and it is inversely proportional to the frequency, meaning that a larger scale factor results in a stretched wavelet which corresponds to the lower frequency, and smaller scale factor results in a shrunken wavelet which corresponds to a higher frequency. An extended wavelet will result in capturing slowly varying changes in signal and a shrunk wavelet will help to detect abrupt changes. By shifting a wavelet of different scales of the time signal, the local variation of a signal is detected. This concept introduces the continuous wavelet transform (CWT). In particular, the temporal signal is therefore transformed in a CWT-signal.

Scalograms are a form of the transforming continuous wavelet transform into a three-dimensional tensor, with a predetermined number of layers, in which each layer corresponds to be conventions of the signal data with a different scale of the mother wavelet for each layer. After labeling the windows and creating the scalogram from each window, the scalograms are used as the input for training the artificial intelligence algorithm. By creating the scalograms from all the windows, it is observable that the scalograms may represent the common event, contain a very similar pattern, which is very different from the non-event, which belongs to the windows that do not refer to the same event. The next step is selecting an appropriate artificial intelligence algorithm. Along with the main strategy a method is proposed, which detects the objects in the intended class, for example the objects/scalograms or windows, which are included in the event presented the time intervals.

In particular, as on the scalogram images, a result of the filtering is, that the continuous wavelet transform magnitudes which lay out of the determined interval have been disappeared from the scalograms and only magnitudes which lay inside or over the first threshold are standing out in a distinguishable manner with fully clear boarders with respect to the rest of the scalograms such that an object detection algorithm is able to detect the object with for example a bounding box representing the precise event spots on the scalograms. In the next step, the object detection algorithm is trained which can detect the objects representing the occurrence of the decided event on the scalograms.

According to an embodiment, the temporal signal is divided into time frames and the event signal is generated depending on the time frames. In particular, the temporal signal is divided so-called windows, and each window is analyzed by a scalogram. Therefore, an easy way for detecting the event is provided.

According to another embodiment, the scalogram is filtered such that a value of a magnitude below the first threshold is set to zero. Therefore, for speeding up the convergence of the object detection and enhancing the tracking process, there is a need to define the filter which highlights the events on the scalograms. For this aim, the recorded time-series-data of for example a steering column moment gathered from the several LSS tests are examined and by inspecting the continuous wavelet transform magnitudes at the spots where a steering wheel was vibrated, for example a rough interval for the continuous wavelet transform magnitudes at these spots is determined.

According to another embodiment, the scalogram is filtered such that to a value of a magnitude higher than a second threshold for a magnitude of the event, in the event signal a correction value is added. Therefore, for all the continuous wavelet transform magnitudes higher than the second threshold, which may be the bigger end point of the determined interval, the continuous wavelet transform magnitudes should be set/equalize to a higher end point with the correction value. The correction value may be for example a small value. Therefore, a precise detection of the event may be realized.

In an embodiment, additionally to the filtering, values for the magnitude below the first threshold are whitened in the scalogram. Therefore, the filter is defined such that the continuous wavelet transform magnitudes smaller than the threshold, which may be for example an end point of the determined interval, should be equalized or set to zero and for example a color of the value zero on the scalogram is set on white instead of dark blue. As a result of the so-called whitening the RGB images (red green blue) of the scalogram, the readability of the scalograms for detecting the event is improved.

In another embodiment the training data is generated for an auto encoder as the artificial intelligence. Auto encoders are a special type of the unsupervised networks which can operate perfectly as for example a one class classificator. They could not be trained to produce a class or a digit as an output, but they can reproduce the inputs they were fed into the network. An auto encoder attempts to do two things. First, the auto encoder compresses the input data into a lower dimension. Then, the auto encoder tries to recreate the original input data from those lower dimension representations. The difference between the attempted recreation and original input is called reconstruction error. By training the auto encoder to minimize the reconstruction error on the given data set, the auto encoder learns to explore the natural hidden structure in the data and find an efficient lower dimension representation. The initial layers of the auto encoder network which compress the data, are called encoder part. It transforms the original input to the lower dimension representations. The encoder approximates the function that maps the data from its full input space into a lower dimensional coordinate system. The second part of an auto encoder is called a decoder. A decoder attempts to recreate the original input, using the output of the decoder. In other words, it reverses the encoding process and recreates a higher dimensional mapping from the data with lower dimensions. The higher dimensional data should have the same number of dimensions as the input data. Therefore, throughout the training process, the encoder tries to find the most efficient way to condense the data into a lower dimension, while the decoder tries to decode the lower dimensional data to minimize the reconstruction error and when the auto encoder network is trained based on the inputs which have common hidden structure, the auto encoder will learn to reproduce the similarity, and as a result the amount of reconstruction errors will be getting lower and lower for the inputs containing that special similarity. Since the network has learned to reproduce the similarity during the training process for the test input data containing similarity in their structure, the network will output the lower reconstruction error. In this way, one can take the advantage of reconstruction error and use it as a metric for detecting the data points or objects, which belong to one specific class or refer to a special event and ignore all the other different data points or objects. All encoders take both numerical input data as well as images and virtual representations such as scalograms and spectrograms as input. Therefore, an auto encoder is trained based on the filtered scalograms. In this regard, the auto encoder learns to minimize the reconstruction error for the scalograms or timing windows containing the event, and since the network has not been fed with. By choosing an appropriate threshold for the reconstruction error, the algorithm is able to differentiate between the scalograms.

In another embodiment the event is a warning vibration signal at a steering wheel of the motor vehicle and the temporal signal is a vibration at the steering wheel column of the motor vehicle. Therefore, for example, a detection of the warning vibration signal at the steering wheel column may be provided with the test system.

According to another embodiment the warning vibration signal is generated by a lane assistance system of the motor vehicle. In particular, as already mentioned, a lane assistance system or the LSS generates a vibration at the steering wheel, when for example, the motor vehicle is going to cross the lane. Therefore, it is advantageous, if the training data for this event are generated. Therefore, the generated vibration at the steering column can be detected as the event and therefore further analyses about this event can be processed.

Another aspect of the invention relates to a method for training an artificial intelligence for determining an event of a motor vehicle by using the training data according to the preceding aspect. In particular, the artificial intelligence is trained by the method according to the preceding aspect. Furthermore, in particular, the artificial intelligence is an auto encoder.

A still further aspect of the invention relates to a method for determining an event of a motor vehicle by an assistance system of the motor vehicle. A temporal signal is captured by a capturing device of the assistance system. The temporal signal is transformed to an event signal by an electronic computing device of the assistance system. A scalogram of the event signal is generated by the electronic computing device. The scalogram is filtered depending on a provided threshold and the event is determined in the temporal signal by using an artificial intelligence trained according to a method according to the preceding aspect.

In particular, the assistance system and the test system may be configured with the same means, in particular, with the same capturing device and the same electronic computing device.

Therefore, the capturing device from the test system may be the same capturing device as the capturing device from the assistance system. Furthermore, the electronic computing device from the test system may be the same electronic computing device as the electronic computing device from the assistance system.

According to an embodiment a time frame between detecting a potential vehicle event in the future and the determined event is determined by the electronic computing device. For example, a time frame between a lane event and the determined warning vibration signal is determined by the electronic computing device. Furthermore, the lane event is a potential lane crossing of the motor vehicle in the future. Furthermore, the potential lane crossing is determined depending on captured surroundings by a further capturing device of the assistance system, for example, by a camera or a radar sensor of the motor vehicle. Furthermore, a threshold for the time frame is provided and the determined time frame is evaluated depending on the provided threshold. Therefore, in order to use the developed artificial intelligence algorithm for detecting the event throughout the time-series-signal, first the recorded signal is going to be windowed according to the same window size and step size that was used in a training step after advancing through the signal and extracting the timing window, respective scalogram of each window is going to be recreated. Then, the scalograms are generated and/or the trained auto encoder network is used for analyzing the data in temporal order, and then the reconstruction of each scalogram is calculated.

A still further aspect of the invention relates to a computer program product comprising program code means for performing a method according to the first aspect of the invention or to a computer program product with program code means for performing a method according to the second aspect of the invention.

Furthermore, the invention relates to a computer-readable storage medium comprising the computer program product for performing a method according to the first aspect and/or for performing a method according to the second aspect of the invention. A still further aspect of the invention relates to a test system for generating training data for training an artificial intelligence for determining an event of a motor vehicle, comprising at least one capturing device and one electronic computing device, wherein the test system is configured for performing a method according to the first aspect of the invention and/or a test system for training the artificial intelligence, when the test system is configured for performing a method according to the second aspect of the invention.

Furthermore, the invention relates to an assistance system for determining an event of a motor vehicle, comprising at least one capturing device and one electronic computing device with an artificial intelligence, wherein the assistance system is configured for performing a method according to the third aspect of the invention.

The test system and the assistance system may be configured in the same system. In particular, the test system and the assistance system may comprise the same capturing device as well as the same electronic computing device.

The electronic computing device may comprise at least processors, circuits, in particular integrated circuits, or further electronic means for performing the method.

A still further aspect of the invention relates to a motor vehicle comprising the test system and/or the assistance system.

An artificial neural network/artificial intelligence can be understood as a software code or a compilation of several software code components, wherein the software code may comprise several software modules for different functions, for example one or more encoder modules and one or more decoder modules.

An artificial neural network can be understood as a non-linear model or algorithm that maps an input to an output, wherein the input is given by an input feature vector or an input sequence and the output may be an output category for a classification task or a predicted sequence.

For example, the artificial neural network may be provided in a computer-readable way, for example, stored on a storage medium of the vehicle, in particular of the at least one computing unit.

The neural network comprises several modules including the encoder module and the at least one decoder module. These modules may be understood as software modules or respective parts of the neural network. A software module may be understood as software code functionally connected and combined to a unit. A software module may comprise or implement several processing steps and/or data structures.

The modules may, in particular, represent neural networks or sub-networks themselves. If not stated otherwise, a module of the neural network may be understood as a trainable and, in particular, trained module of the neural network. For example, the neural network and thus all of its trainable modules may be trained in an end-to-end fashion before the method is carried out. However, in other implementations, different modules may be trained or pre-trained individually. In other words, the method according to the invention corresponds to a deployment phase of the neural network.

In the context of the present disclosure, an object detection algorithm may be understood as a computer algorithm, which is able to identify and localize one or more objects within a provided input dataset, for example input image, by specifying respective bounding boxes or regions of interest, ROI, and, in particular, assigning a respective object class to each of the bounding boxes, wherein the object classes may be selected from a predefined set of object classes. Therein, assigning an object class to a bounding box may be understood such that a corresponding confidence value or probability for the object identified within the bounding box being of the corresponding object class is provided. For example, the algorithm may provide such a confidence value or probability for each of the object classes for a given bounding box. Assigning the object class may for example include selecting or providing the object class with the largest confidence value or probability. Alternatively, the algorithm can specify only the bounding boxes without assigning a corresponding object class.

An electronic computing device/ computing unit may in particular be understood as a data processing device, which comprises processing circuitry. The computing unit can therefore in particular process data to perform computing operations. This may also include operations to perform indexed accesses to a data structure, for example a look-up table, LUT.

In particular, the computing unit may include one or more computers, one or more microcontrollers, and/or one or more integrated circuits, for example, one or more applicationspecific integrated circuits, ASIC, one or more field-programmable gate arrays, FPGA, and/or one or more systems on a chip, SoC. The computing unit may also include one or more processors, for example one or more microprocessors, one or more central processing units, CPU, one or more graphics processing units, GPU, and/or one or more signal processors, in particular one or more digital signal processors, DSP. The computing unit may also include a physical or a virtual cluster of computers or other of said units.

In various embodiments, the computing unit includes one or more hardware and/or software interfaces and/or one or more memory units.

A memory unit may be implemented as a volatile data memory, for example a dynamic random access memory, DRAM, or a static random access memory, SRAM, or as a non-volatile data memory, for example a read-only memory, ROM, a programmable read-only memory, PROM, an erasable programmable read-only memory, EPROM, an electrically erasable programmable read-only memory, EEPROM, a flash memory or flash EEPROM, a ferroelectric random access memory, FRAM, a magnetoresistive random access memory, MRAM, or a phase-change random access memory, PCRAM.

Unless stated otherwise, all steps of the computer-implemented method may be performed by a data processing apparatus, which comprises at least one computing unit, in particular a data processing apparatus of the vehicle. In particular, the at least one computing unit is configured or adapted to perform the steps of the computer-implemented method. For this purpose, the at least one computing unit may for example store a computer program comprising instructions which, when executed by the at least one computing unit, cause the at least one computing unit to execute the computer-implemented method.

All computing units of the at least one computing unit may be comprised by the vehicle. However, it is also possible that all computing units of the at least one computing unit are part of an external computing system external to the vehicle, for example a backend server or a cloud computing system. It is also possible that the at least one computing unit comprises at least one vehicle computing unit of the vehicle as well as at least one external computing unit comprised by the external computing system. The at least one vehicle computing unit may for example be comprised by one or more electronic control units, ECUs, and/or one or more zone control units, ZCUs, and/or one or more domain control units, DCUs, of the vehicle.

The invention also comprises embodiments that provide features which afford additional technical advantages. The invention also comprises the combination of the features of the different embodiments. In the following, an exemplary implementation of the invention is described.

For use cases or use situations which may arise in the method and which are not explicitly described here, it may be provided that, in accordance with the method, an error message and/or a prompt for user feedback is output and/or a default setting and/or a predetermined initial state is set.

Further features of the invention are apparent from the claims, the figures and the figure description. The features and combinations of features mentioned above in the description as well as the features and combinations of features mentioned below in the description of figures and/or shown in the figures may be comprised by the invention not only in the respective combination stated, but also in other combinations. In particular, embodiments and combinations of features, which do not have all the features of an originally formulated claim, may also be comprised by the invention. Moreover, embodiments and combinations of features, which go beyond or deviate from the combinations of features set forth in the recitations of the claims may be comprised by the invention.

In the following, the invention will be explained in detail with reference to specific exemplary implementations and respective schematic drawings. In the drawings, identical or functionally identical elements may be denoted by the same reference signs. The description of identical or functionally identical elements is not necessarily repeated with respect to different figures.

In the following, an exemplary implementation of the invention is described.

The figures show:

Fig. 1 ;shows a schematic view according to an embodiment of a motor vehicle comprising an embodiment of an assistance system;

Fig. 2 .a schematic flow chart according to an embodiment of the method;

Fig. 3 another schematic block diagram according to an embodiment of the invention according to the first aspect; and

Fig. 4 another schematic block diagram according to an embodiment of the invention according to the second aspect.

The embodiment explained in the following is a preferred embodiment of the invention. However, in an embodiment, described components of the embodiment each represent individual features of the invention which are to be considered independently of each other and which each developed the invention also independently for each other and thereby are also to be regarded as a component of the invention in individual manner or in another than the shown combination. Furthermore, the described embodiment can also be supplemented by further features of the invention already described.

In the figures identical reference signs indicate elements that provide the same function.

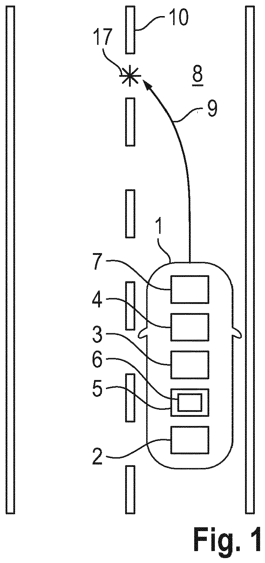

Fig. 1 shows a schematic top view according to an embodiment of a motor vehicle 1. The motor vehicle 1 comprises at least an assistance system 2 for determining an event 11, for example a warning vibration signal on a steering wheel of the motor vehicle 1. The assistance system 2 therefore comprises at least one capturing device 4 and one electronic computing device 5, wherein the electronic computing device 5 comprises at least one artificial intelligence 6.

In Fig. 1 the assistance system 2 is configured as a so-called lane support system (LSS). Therefore, the assistance system 2 may comprise a further capturing device 7, for example a radar sensor or a camera, which captures surroundings 8 of the motor vehicle 1. The assistance system 2 may be configured for determining a future trajectory 9. According to the shown embodiment the future trajectory 9 may cross a lane 10 in the future. Therefore, a vibration signal, in particular the event 11, may be generated for warning a user of the motor vehicle 1. The crossing of the lane 10 is shown in Fig. 1 with the reference sign 17.

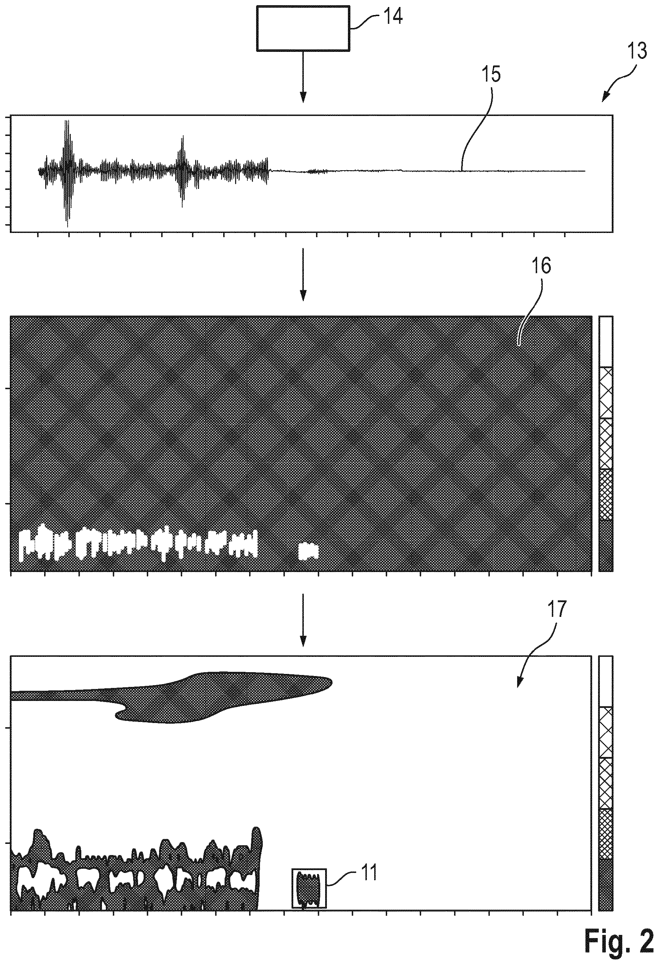

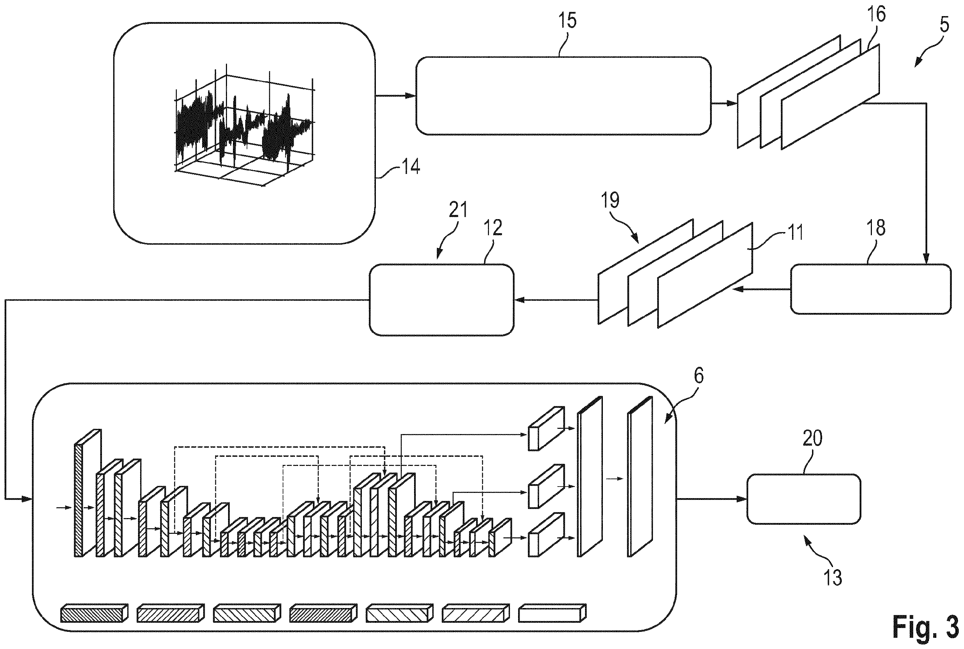

Fig. 2 shows a schematic flow chart according to an embodiment of the invention. In particular Fig. 2 shows a method for generating training data 12 (Fig. 3) for training an artificial intelligence 6 for determining the event 11 in the motor vehicle 1 by a test system 13. A temporal signal 14 is captured by the capturing device 4 of the test system 13. Transforming the temporal signal 14 to an event signal 15 is performed by the electronic computing device 5. A scalogram 16 of the event signal 15 is generated by the electronic computing device 5. A first threshold for a magnitude of the event 11 is provided in the event signal 15. The scalogram 16 is filtered by using the threshold 17. The event 11 in the filtered scalogram 16 is labeled by using a predefined object detection algorithm for the event 11 by electronic computing device 5. The labeled event 11 is extracted depending on the extracted event by the electronic computing device 5.

In particular Fig. 2 shows, that the scalogram 16 is filtered such that a value of the magnitude below the first threshold is set to zero and wherein the scalogram is filtered such that to a value of a magnitude higher than a second threshold for a magnitude of the event in the event signal 15 a correction value is added. Furthermore, additionally to the filtering, values for the magnitude below the first threshold 17 are whitened in the scalogram 16.

In particular, Fig. 2 shows, that effectively monitoring the occurred events 11 throughout the test is one of the most important steps in developing efficient safety systems. According to the shown embodiment, the event 11 may be implementing a warning vibration signal at a steering column. Furthermore, issuing warnings such as the vibration alarms and taking appropriate counter measures to avoid the risky situations through the drive are the next important step in developing the assistance system 2. Deep learning methods are powerful tools in automatically identifying the events 11 based on recorded time-series-data. Compared to traditional event detection methods in the field of signal processing, deep learning approaches are able to automatically track a certain event from a large set of recorded data and reduce the dependency on expert experiences acknowledge an accurate condition monitoring algorithm requires features of high quality extracted from the time-series-data. The continuous wavelet transform (CWT) is a highly effective feature extraction tool, which is able to characterize the mapping relationship between the status of the assistance system 2 or test system 13 and recorded signals through the decomposing time-series-data into superposition of base waves of multiple scales. The time-series-data, that are recorded by the capturing device 4, have nonstationary properties and this issue makes the event detection much more complicated for them. however, the scalogram 16 is one of the ideal tools in detecting the transcend phenomena of short duration for non-transitory stational signals, due to their spectro-temporal characteristic which takes both the time and frequency aspects of the time-series-data into account. The scalogram 16 is a visual representation of the wavelet transform in a three-dimensional space having access for time, scale and coefficient magnitudes.

After gathering the measured data from the capturing device 4, the recorded data by the sensor matching moment on the steering column are converted into the scalogram 16. In order to make the events 11 visually distinguishable on the scalogram 16, the length of the scalogram 16 images is adopted to the length of the measurements., in a way that, for example, every one millisecond measurements in the time-series-data, 1024 pixels on the scalogram 16 were generated and therefore the length of the scalogram 16 has a direct relation with respect to the length of the measurements.

For generating the scalogram 16, after extracting a two-dimensional output matrix, the matrixes are converted into a three-dimensional RGB (red-green-blue) format. After extracting the scalogram 16 from the recorded time-series-data, which have measured the moment for example on the steering column, it could be seen that the objects on the scalogram 16 representing the desired event 11 are unclear and vague. For speeding up the convergence of the object detection networks and enhancing the tracking process, there is a need to define a filter which highlights the events 11 on the scalogram 16. For this aim, the recorded time-series-data on the steering column moment gathered from the tests are examined and by inspecting the continuous wave transform magnitudes at the spots were the steering wheel was vibrated, a rough interval for the continuous wave transform magnitudes at these spots is determined. Afterwards, a filter is defined such that for the continuous wavelet transform magnitudes less then smaller then the first threshold, which may be an end point of the determined interval, should be equalized to/set on zero and the color for the value of zero on the scalogram 16 is set on white instead of dark blue. As a result of whitening the RGB images, the readability of the scalogram 16 for detecting the event 11 is improved. Furthermore, all constant wave magnitudes continuous wavelet transform magnitudes higher then a second threshold, in particular bigger then the second or bigger end point of the determined interval, the continuous wavelet transform magnitudes should be set on/equalize to higher end point plus a correction value, wherein the correction value is a very small value. This is in particular shown in Fig. 2, in the third part of the Fig. 2.

Fig. 3 shows a schematic block diagram according to an embodiment of the method. As shown in Fig. 3 temporal data 14 are inputted and are transformed to the event signal 15. For example, the temporal signal 14 may be transformed with the formula:

$$CWT(a,b) = \frac{1}{\sqrt{a}} \int_{-\infty}^{+\infty} f(t) . \psi^* \left( \frac{t-b}{a} \right) dt$$

Scalograms 16 are extracted from the average of the CWTs for time series data. A wavelet is a waveform of limited duration with an average of zero. In order to generate scalograms 16 from time series data, different kinds of base wavelet can be used such as Gabor wavelet, Morse and Bump wavelets. Choosing the right base wavelet plays a significant role in mapping the time series data into the 3$^{rd}$ dimension of the scalograms 16. One of the very common wavelets is Gabor wavelet. For this invention, for example, a 2D Gabor wavelet may be used as base wavelets. The Gabor wavelets are analytic wavelets with complex values in the time domain. They have equal variance in time and frequency. Gabor wavelet is defined as (1),

$$\psi(t) = e^{j\omega_0 t} e^{-\frac{t^2}{2}} \qquad (1)$$

Where $\omega_0$ is frequency of the Wavelet. The CWT of a time series data of $f(t)$ is then calculated by (2),

$$CWT(a,b) = < f, \psi_{a,b} > = \frac{1}{\sqrt{a}} \int_{-\infty}^{+\infty} f(t) . \psi(\frac{t-b}{a}) \, dt \qquad a, b \in \mathbb{R} \qquad (2)$$

Where a is the scale of the wavelet which either compresses the wavelet or stretches it out whereas *b* is the position of the wavelet and $< f, \psi_{a,b} >$ is the inner product, the value of the CWT is computed for different values of scale a and position b. The CWT representation possesses axes for time, scale and the magnitude of the CWTs is then placed in the third axis, thus creating a visual representation using the wavelet transform in a three-dimensional space.

After that, the scalogram 16/the scalograms 16 is/are generated. Depending on the threshold a filtering and whitening 18 is performed. The filtered scalograms 19 are then used for extracting the labeled event from the event signal 15 by the electronic computing device 5. Training data 12 are generated depending on the extracted event 11. The training data 12 are fed in the artificial intelligence 6. After that, a trained artificial intelligence 20 is provided.

In particular, it can be seen in Fig. 3, that the scalogram images, as a result of applying the filter, the continuous wavelet transform magnitudes which lay out of the determined interval have been disappeared from the scalogram 16 and only the magnitudes which lay inside the interval are standing out in a distinguishable manner with fully clear boarders with respect to the rest of the scalogram 16 such that an object detection algorithm is be able to detect the object with a bounding box representing the precise event spots on the scalogram 16. In a next step, an object detection algorithm is trained which can detect the objects representing the occurrence of the decided event 11 on the scalogram 16. For example, the yolo models can be used for that. Therefore, in particular Fig. 3 shows the whole training algorithm.

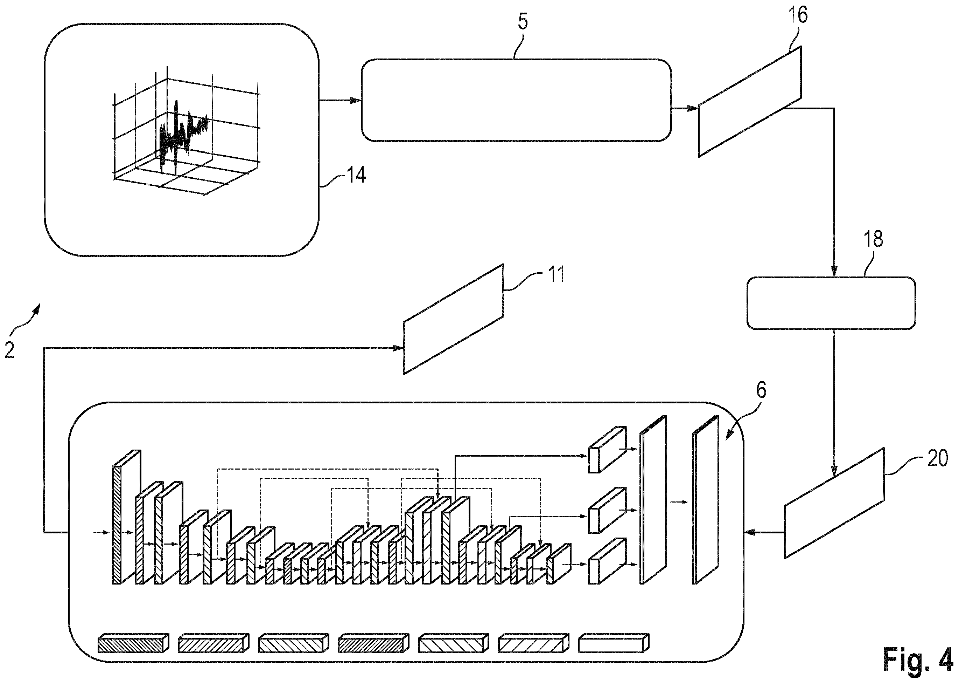

Fig. 4 shows another schematic block diagram according to an embodiment of the invention. In particular, Fig. 4 shows the assistance system 2. In particular, Fig. 4 shows the use of the trained artificial intelligence 6. In particular, after training the detector based on the objects on the scalograms 16, the next step is the implementing of the object detection in the signal processing algorithm as shown in Fig. 4. After carrying out a new lane system test, that are recorded by the capturing device 4, in particular the temporal signal 4, which may for example a moment on the steering wheel, is gathered and the corresponding scalogram 16 is generated. The created scalogram 16 is filtered. Then the object detection model tries to detect the object representing the event 11 on the scalogram 16 and if the object with a threshold higher then a limit is detected on the scalograms 16, the corresponding time interval on the scalogram 16 is projected back to the time-series-data and the detected interval is marked.

**Reference list**

1      motor vehicle
2      assistance system
3      steering wheel
4      capturing device
5      electronic computing device
6      artificial intelligence
7      further capturing device
8      surroundings
9      trajectory
10    lane
11    event
12    training data
13    test system
14    temporal signal
15    event signal
16    scalogram
17    first threshold
18    filtering and whitening
19    filtered scalogram
20    trained artificial intelligence

**Claims**

**1.** Method for generating training data (12) for training an artificial intelligence (6) for determining an event (11) in a motor vehicle (1) by a test system (13), comprising the steps of:

- Capturing a temporal signal (14) by a capturing device (4) of the test system (13);
- Transforming the temporal signal (14) to an event signal (15) by an electronic computing device (5) of the test system (13);
- Generating a scalogram (16) of the event signal (15) by the electronic computing device (5);
- Providing a first threshold (17) for a magnitude of the event (11) in the event signal (15);
- Filtering the scalogram (16) by using the threshold (17);
- Labeling the event (11) in the filtered scalogram (19) by using an predefined object detection algorithm (21) for the event (11) by the electronic computing device (5);
- Extracting the labeled event (11) from the event signal (15) by the electronic computing device (5); and
- Generating the training data (12) depending on the extracted event (11) by the electronic computing device (5).

2. Method according claim 1, wherein the temporal signal (14) is divided into time frames and the event signal (15) is generated depending on the time frames.

3. Method according to claim 1 or 2, wherein the scalogram (16) is filtered such that a value of a magnitude below the first threshold (17) is set to zero.

4. Method according to any of claims 1 to 3, wherein the scalogram (16) is filtered such that to a value of a magnitude higher than a second threshold for a magnitude of the event (11) in the event signal (15) a correction value is added.

5. Method according to any of claims 1 to 4, wherein additionally to the filtering, values for the magnitude below the first threshold (17) are whitened in the scalogram (16).

6. Method according to any claims 1 to 5, wherein the training data (12) is generated for an Autoencoder as the artificial intelligence (6).

7. Method according to any of claims 1 to 6, wherein the event (11) is a warning vibration signal at a steering wheel (3) of the motor vehicle (1) and the temporal signal (14) is a vibration at a steering wheel column of the motor vehicle (1).

8. Method according to claim 7, wherein the warning vibration signal is generated by a lane assistance system as the assistance system (2) of the motor vehicle (1).

9. Method for training an artificial intelligence (6) for determining an event (11) of a motor vehicle (1) by using the training data (12) generated by a method according to any of claims 1 to 8.

10. Method for determining an event (11) of a motor vehicle (1) by an assistance system (2) of the motor vehicle (1), comprising the steps of:

- Capturing a temporal signal (14) by an capturing device (4) of the assistance system (2);
- Transforming the temporal signal (14) to an event signal (15) by an electronic computing device (5) of the assistance system (2);
- Generating a scalogram (16) of the event signal (15) by the electronic computing device (5);
- Filtering the scalogram (16) depending on a provided first threshold (17); and
- Determining the event (11) in the temporal signal (14) by using an artificial intelligence (6) trained according to a method according to claim 9.

11. Method according to claim 10, wherein a time frame between detecting a potential vehicle event in the future and the determined event (11) is determined by the electronic computing device (5).

12. Method according to claim 11, wherein a threshold for the time frame is provided and the determined time frame is evaluated depending on the provided threshold.

13. Computer program product with program code means for performing a method according to any of claims 1 to 8 and/or a computer program product with program code means for performing a method according to any of claims 10 to 12.

14. Test system (13) for generating training data (12) for training an artificial intelligence (6) for determining an event (11) of a motor vehicle (1), comprising at least one capturing device (4) and one electronic computing device (5), wherein the test system (13) is configured for performing a method according to any of claims 1 to 8 and/or a test system (13) for training the artificial intelligence (6), wherein the test system (13) is configured for performing a method according to claim 9.

15. Assistance system (2) for determining an event (11) of a motor vehicle (1), comprising at least one capturing device (4) and one electronic computing device (5) with an artificial intelligence (6), wherein the assistance system (2) is configured for performing a method according to any of claims 10 to 12.

Fig. 1

Fig. 2

Fig. 3

Fig. 4

Europäisches
Patentamt

European
Patent Office

Office européen
des brevets

# EUROPEAN SEARCH REPORT

**Application Number**

**EP 23 17 4940**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | OLUSIJI MEDAIYESE ET AL: "Wavelet Transform Analytics for RF-Based UAV Detection and Identification System Using Machine Learning", ARXIV.ORG, CORNELL UNIVERSITY LIBRARY, 201 OLIN LIBRARY CORNELL UNIVERSITY ITHACA, NY 14853, 23 February 2021 (2021-02-23), XP081891187, * section 3-6; page 2; figures 2, 13 * | 1-15 | INV. G06F17/14 G06F17/18 |
| A | LEE JUN S ET AL: "Evaluation of structural integrity of railway bridge using acceleration data and semi-supervised learning approach", ENGINEERING STRUCTURES, ELSEVIER, AMSTERDAM, NL, vol. 239, 17 April 2021 (2021-04-17), XP086579896, ISSN: 0141-0296, DOI: 10.1016/J.ENGSTRUCT.2021.112330 [retrieved on 2021-04-17] * section 3 * | 1-15 | |
| A | EISELE JONA ET AL: "Convolutional neural network with data augmentation for object classification in automotive ultrasonic sensing", THE JOURNAL OF THE ACOUSTICAL SOCIETY OF AMERICA, AMERICAN INSTITUTE OF PHYSICS, 2 HUNTINGTON QUADRANGLE, MELVILLE, NY 11747, vol. 153, no. 4, 21 April 2023 (2023-04-21), pages 2447-2459, XP012274183, ISSN: 0001-4966, DOI: 10.1121/10.0017922 [retrieved on 2023-04-21] * sections IV-VI * | 1-15 | TECHNICAL FIELDS SEARCHED (IPC) G06F G06N |

-/--

The present search report has been drawn up for all claims

| Place of search | Date of completion of the search | Examiner |
|---|---|---|
| Berlin | 7 November 2023 | Virnik, Elena |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 23 17 4940

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2021/186186 A1 (SNORING DOG LTD [GB]) 23 September 2021 (2021-09-23) * abstract * | 1-15 | |
| A | US 2022/198254 A1 (DALLI ANGELO [MT] ET AL) 23 June 2022 (2022-06-23) * paragraph [0299] - paragraph [0304] * | 1-15 | |
| A | Arefnezhad Sadegh ET AL: "Driver Monitoring of Automated Vehicles by Classification of Driver Drowsiness using a Deep Convolutional Neural Network Trained by Scalograms of ECG Signals", , 10 November 2021 (2021-11-10), XP093098512, DOI: 10.20944/preprints202111.0230.v1 Retrieved from the Internet: URL:https://www.mdpi.com/1996-1073/15/2/480/pdf?version=1642410731 [retrieved on 2023-11-06] * section 3 * | 1-15 | |
| A | NUZZO MICHAEL L ET AL: "Situational Awareness with Ubiquitous Sensing: Towards Real-time Event Detection & Classification", 2019 IEEE INTELLIGENT TRANSPORTATION SYSTEMS CONFERENCE (ITSC), IEEE, 27 October 2019 (2019-10-27), pages 110-115, XP033668577, DOI: 10.1109/ITSC.2019.8917252 [retrieved on 2019-11-27] * section II * | 1-15 | |
| A | US 2014/297172 A1 (HUELSEN MICHAEL [DE]) 2 October 2014 (2014-10-02) * abstract * | 1-15 | |

**TECHNICAL FIELDS SEARCHED     (IPC)**

The present search report has been drawn up for all claims

| Place of search | Date of completion of the search | Examiner |
|---|---|---|
| Berlin | 7 November 2023 | Virnik, Elena |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

page 2 of 2

## ANNEX TO THE EUROPEAN SEARCH REPORT
## ON EUROPEAN PATENT APPLICATION NO.

EP 23 17 4940

This annex lists the patent family members relating to the patent documents cited in the above-mentioned European search report.
The members are as contained in the European Patent Office EDP file on
The European Patent Office is in no way liable for these particulars which are merely given for the purpose of information.

07-11-2023

| Patent document cited in search report | Publication date | Patent family member(s) | | Publication date |
|---|---|---|---|---|
| WO 2021186186 A1 | 23-09-2021 | AU | 2021237815 A1 | 20-10-2022 |
| | | CA | 3175620 A1 | 23-09-2021 |
| | | CN | 115720555 A | 28-02-2023 |
| | | EP | 4121330 A1 | 25-01-2023 |
| | | GB | 2609802 A | 15-02-2023 |
| | | JP | 2023518310 A | 28-04-2023 |
| | | KR | 20230016163 A | 01-02-2023 |
| | | US | 2023182759 A1 | 15-06-2023 |
| | | WO | 2021186186 A1 | 23-09-2021 |
| US 2022198254 A1 | 23-06-2022 | AU | 2021399965 A1 | 03-08-2023 |
| | | CA | 3202297 A1 | 23-06-2022 |
| | | CN | 116888602 A | 13-10-2023 |
| | | EP | 4264498 A1 | 25-10-2023 |
| | | KR | 20230128492 A | 05-09-2023 |
| | | US | 2022198254 A1 | 23-06-2022 |
| | | US | 2023153599 A1 | 18-05-2023 |
| | | WO | 2022129610 A1 | 23-06-2022 |
| US 2014297172 A1 | 02-10-2014 | CN | 103782192 A | 07-05-2014 |
| | | DE | 102011082126 A1 | 07-03-2013 |
| | | EP | 2753953 A1 | 16-07-2014 |
| | | JP | 2014533386 A | 11-12-2014 |
| | | KR | 20140057583 A | 13-05-2014 |
| | | US | 2014297172 A1 | 02-10-2014 |
| | | WO | 2013034338 A1 | 14-03-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20160221575 A1
- US 20200346656 A1